# EUROPEAN PATENT SPECIFICATION

(11) **EP 2 913 521 B1**
(45) Date of publication and mention of the grant of the patent: **28.09.2016**
(21) Application number: 14180384.1
(22) Date of filing: 08.08.2014
(51) Int. Cl.: F03D 13/20

(54) **TOWER FOR WIND TURBINE GENERATOR AND WIND TURBINE GENERATOR**
Turm für einen Windturbinengenerator und Windturbinengenerator
Tour pour éolienne et générateur de turbine éolienne

(30) Priority: 28.02.2014 JP 2014038138
(43) Date of publication of application: 02.09.2015
(73) Proprietor: MITSUBISHI HEAVY INDUSTRIES, LTD., Tokyo 108-8215 (JP)
(72) Inventor: Nakayama, Shin, Tokyo 108-8215 (JP); Okafuji, Takashi, Tokyo 108-8215 (JP); Matsumoto, Shunsaku, Tokyo 108-8215 (JP); Yokoyama, Hiroaki, Tokyo 108-8215 (JP); Hasegawa, Kazumasa, Tokyo 108-8215 (JP)
(74) Representative: Intès, Didier Gérard André

(56) References cited:
- CN-A- 102 434 408
- CN-U- 201 588 746
- DE-U1-202009 015 675
- US-A1- 2011 037 270

## Description

### TECHNICAL FIELD

This disclosure relates to a tower for a wind turbine generator, and a wind turbine generator.

### BACKGROUND

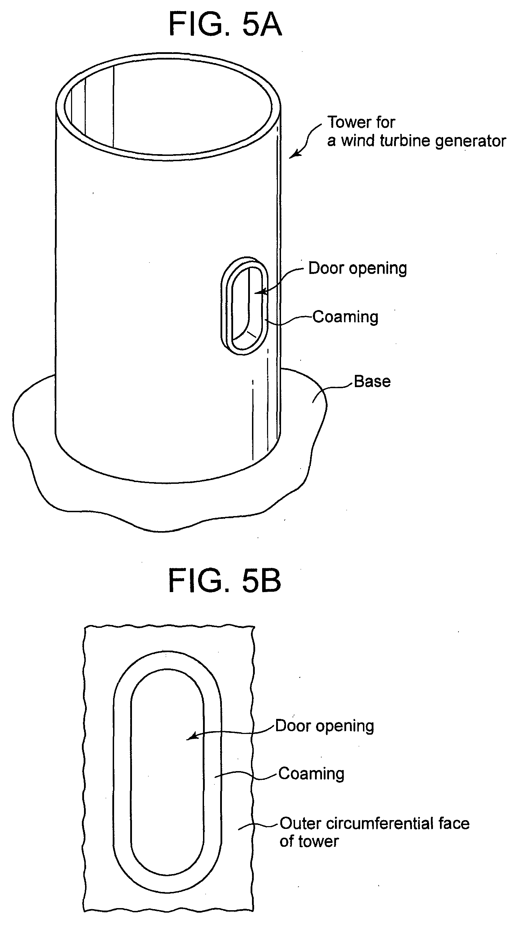

The tower of a wind turbine generator normally includes a door opening at the lower part of the tower, through which persons and equipments used for the wind turbine generator go in and out (see Fig. 5A).

Conventionally, it is common to form this opening in a shape obtained by combining straight lines and semicircular arcs as seen in the radial direction of the tower, as shown in Fig. 5B. Patent Documents 1 and 2 describe a door opening of such a shape.
Patent Document 3 discloses a tower frame door for a wind turbine tower, and a design method of the tower frame door opening.
Patent Document 4 discloses a wind turbine comprising a tower with an opening having air intake and exhaust openings passing through said tower port for passage of cooling air.
Patent Document 5 discloses a tower doorframe comprising a doorframe body which is formed by the integral forging and comprises a vertical part and an arced body.
Patent Document 6 discloses a tubular tower section with a peripheral wall, which comprises an opening positioned on the peripheral wall and used for allowing access to the inside of the tower.

### Citation List

### Patent Literature

Patent Document 1: US8171674B
Patent Document 2: US8109061B
Patent Document 3: CN102434408A
Patent Document 4: US2011037270A
Patent Document 5: CN201588746U
Patent Document 6: DE202009015675U

### SUMMARY

### Technical Problem

Around the door opening provided for the tower for a wind turbine generator, stresses in various directions are caused by the wind load received by the wind turbine generator. However, as described above, the shape obtained by combining straight lines and semicircular arcs has been generally used for the door opening, not a shape for which the directions of the stress are appropriately taken into consideration. Accordingly, this has led to increase in size of the reinforcement configuration such as the coaming for the purpose of achieving the standard required for the fatigue strength around the door opening.

The present invention has been made in view of the conventional problem described above. An object of some embodiments of the invention is to provide a tower for a wind turbine generator with a simple configuration that has high fatigue strength around the door opening.

### Solution to Problem

(1) A tower for a wind turbine generator according to some embodiments of the present invention comprises a door opening,
   wherein, as seen from a radial direction of the tower,
   an upper rim part of the door opening has a curvature radius larger than a half of a width of the opening in at least a part of a first section between an intersection P and an intersection Q and in at least a part of a second section between an intersection R and an intersection S, where:
   the upper rim part is a part of a rim of the door opening which is above a center of the door opening in a height direction of the tower,
   the intersection P is an intersection of the upper rim part and a straight line passing through a central position in both width and height directions of the opening and forming an angle of 15 degrees with a vertical line passing through the central position;
   the intersection Q is an intersection of the upper rim part and a straight line passing through the central position and forming an angle of 60 degrees with the vertical line passing through the central position;
   the intersection R is an intersection of the upper rim part and a straight line passing through the central position and forming an angle of minus 15 degrees with the vertical line passing through the central position; and
   the intersection S is an intersection of the upper rim part and a straight line passing through the central position and forming an angle of minus 60 degrees with the vertical line passing through the central position, characterized in that
      a thickness of the upper rim part in the at least one part of the first section is larger than a thickness of the upper rim part at the intersection V of the upper rim part and the vertical line passing through the central position, and
      a thickness of the upper rim part in the at least one part of the second section is larger than the thickness of the upper rim part at the intersection V of the upper rim part and the vertical line passing through the central position.

According to the result of the research conducted by the inventors, it became clear that, in the tower for a wind turbine generator, the stress tends to concentrate on the first section between the intersection P and the intersection Q and in the second section between the intersection R and the intersection S of the upper rim part of the door opening for equipments and persons to go in and out when the wind turbine receives load.

Thus, by forming the upper rim part of the opening to have a curvature radius larger than half the width of the door opening in at least a part (preferably, the entire part) of the first section between the intersection P and the intersection Q and in at least a part (preferably, the entire part) of the second section between the intersection R and the intersection S as in the tower for a wind turbine generator described in (1), it is possible to effectively increase the fatigue strength of the part on which the stress tends to concentrate. Accordingly, it is possible to achieve high fatigue strength around the door opening even when the reinforcement configuration of the coaming or the like is simplified. As a result, it is possible to provide a tower for a wind turbine generator with a simple configuration with high fatigue strength around the door opening.

"The upper rim part of the door opening" herein indicates the part above the central position in the height direction of the door opening (the height direction of the tower) of the rim of the door opening.
(2) In some embodiments, in the tower for a wind turbine generator according to (1), the curvature radius of the upper rim part in the at least one part of the first section is larger than a curvature radius of the upper rim part at the intersection V of the upper rim part and the vertical line passing through the central position, and the curvature radius of the upper rim part in the at least one part of the second section is larger than the curvature radius of the upper rim part at the intersection V, as seen in the radial direction of the tower.

According to the research of the inventors, in the tower for a wind turbine generator, it became clear that the stress is more likely to concentrate on the first section between the intersection P and the intersection Q than on the position of the intersection V of the upper rim part of the door opening for equipments and persons to go in and out, when the wind turbine receives the load. Similarly, it became clear that the stress is more likely to concentrate on the second section between the intersection R and the intersection S than on the position of the intersection V.

Thus; in the tower for a wind turbine generator described in (2), the curvature radius of the upper rim part in at least one part (preferably the entire part) of the first section is larger than the curvature radius of the upper rim part at the intersection V. Also, the curvature radius of the upper rim in at least one part (preferably the entire part) of the second section is larger than the curvature radius of the upper rim part at the intersection V.

That is, the door opening is formed so that the fatigue strength is not unnecessarily increased at such part around the opening, on which the stress is less likely to concentrate, while effectively improving the fatigue strength of such part around the opening, on which the stress is more likely to concentrate. Accordingly, it is possible to achieve high fatigue strength around the door opening even when the reinforcement configuration of the coaming or the like is simplified. As a result, it is possible to provide a tower for a wind turbine generator with a simple configuration with high fatigue strength around the door opening.
(3) In some embodiments, in the tower for a wind turbine generator according to (1) or (2), a thickness of the upper rim part in the at least one part of the first section is larger than a thickness of the upper rim part at the intersection V of the upper rim part and the vertical line passing through the central position, and a thickness of the upper rim part in the at least one part of the second section is larger than the thickness of the upper rim part at the intersection V.

As described above, according to the research of the inventors, in the tower for a wind turbine generator, it became clear that the stress is more likely to concentrate on the first section between the intersection P and the intersection Q than on the position of the intersection V of the upper rim part of the door opening for equipments and persons to go in and out, when the wind turbine receives the load. Similarly, it became clear that the stress is more likely to concentrate on the second section between the intersection R and the intersection S than on the position of the intersection V.

Thus, in the tower for a wind turbine generator described in (3), the thickness of the upper rim part in at least one part (preferably, the entire part) of the first section is larger than the thickness of the upper rim part at the intersection V. Also, the thickness of the upper rim part in at least one part (preferably, the entire part) of the second section is larger than the thickness of the upper rim part at the intersection V. That is, the door opening is formed so that the fatigue strength is not unnecessarily increased at such part around the opening, on which the stress is less likely to concentrate, while effectively increasing the fatigue strength of such part around the opening, on which the stress is more likely to concentrate. Accordingly, it is possible to achieve high fatigue strength around the door opening even when the reinforcement configuration of the coaming or the like is simplified. As a result, it is possible to provide a tower for a wind turbine generator with a simple configuration with high fatigue strength around the door opening.
(4) A wind turbine generator according to some embodiments comprises:
   a rotor including at least one blade;
   a generator configured to be driven by rotation energy of the rotor being transmitted; and
   a tower for the wind turbine generator according to any of (1) to (3).

According to the wind turbine generator described in (4), it is possible to achieve high fatigue strength around the door opening even when the reinforcement configuration of the coaming or the like is simplified. As a result, the damage to the tower for a wind turbine generator is reduced with a simple configuration, which makes it possible to realize the stable operation of the wind turbine generator.

### Advantageous Effects

According to at least one embodiment of the present invention, it is possible to provide a tower for a wind turbine generator with a simple configuration with high fatigue strength around the door opening.

### BRIEF DESCRIPTION OF DRAWINGS

FIG. 1 is an overall diagram of the wind turbine generator according to some embodiments.
FIG. 2 is a diagram of the shape of the door opening as seen in the radial direction of the tower according to some embodiments.
FIG. 3A is a cross-sectional diagram taken along the line A-A of Fig. 2. FIG. 3B is a cross-sectional diagram taken along the line B-B of Fig. 2.
FIG. 4 is a flow diagram for determining the shape of the door opening according to some embodiments.
FIG. 5A is an oblique perspective view of the conventional door opening for a tower for a wind turbine generator. FIG. 5B is a diagram of the conventional door opening as seen in the radial direction of the tower.

### DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention. Also, the same element is associated with the same reference sign to occasionally omit the detailed description.

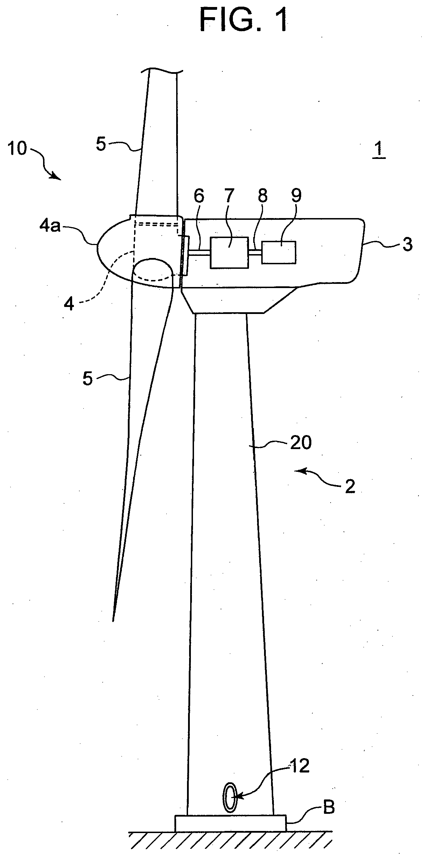

In reference to Fig. 1, the overall configuration of the wind turbine generator according to some embodiments will be described.

As shown in Fig. 1, the wind turbine generator 1 includes a tower 2 provided standing upright on a foundation B (a tower for a wind turbine generator), a nacelle 3 disposed on the top of the tower 2, and a rotor 10 having at least one blade 5.

As shown in Fig. 1, the tower 2 has a cylindrical shape that extends upward (upward as in Fig. 1) from the foundation B. The nacelle 3 is disposed on the top end of the tower 2. Herein, the foundation B may be provided standing upright on the ground, or on the water such as the ocean and the lake. For the lower part of the tower 2, a door opening 12 for equipments and persons to go in and out is provided.

The nacelle 3 supports a hub 4 included in the rotor 10, and also houses a gear box 7, a generator 9, etc inside the nacelle 3. Specifically, a main shaft 6 connected to the hub 4, the gear box 7 connected to the main shaft 6, and the generator 9 connected the output shaft 8 of the gear box 7 are provided inside the nacelle 3.

The main shaft 6 is connected to the hub 4 so as to rotate with the rotor 10, and is fixed to the nacelle 3 side rotatably via a main shaft bearing (not shown).

The gear box 7 is arranged between the main shaft 6 and the generator 9, configured to increase the speed of the rotation inputted from the hub 4 side via the main shaft 6 and then output the rotation to the generator 9. In this manner, the generator 9 is configured to be driven by the rotation energy of the rotor 10 being transmitted. Although Fig. 1 illustrates the configuration in which the rotation of the main shaft 6 is transmitted to the generator 9 via the gear box 7, the configuration of the wind turbine generator 1 is not limited to this. For instance, the wind turbine generator 1 may employ a speed-up system including a hydraulic transmission instead of the mechanical gearbox 7, or a direct drive system that transmits the rotation energy of the blades 5 to the generator 9 without change by directly connecting the main shaft 6 and the generator 9.

The blade 5 is attached to the hub 4, which is configured to rotate with the blade 5 by the blade 5 rotating upon receiving the wind. Inside the hub 4, for instance, the hydraulic instruments, the control boards and the like for performing pitch control of the blades are housed. The hub 4 is covered by a hub cover 4a.

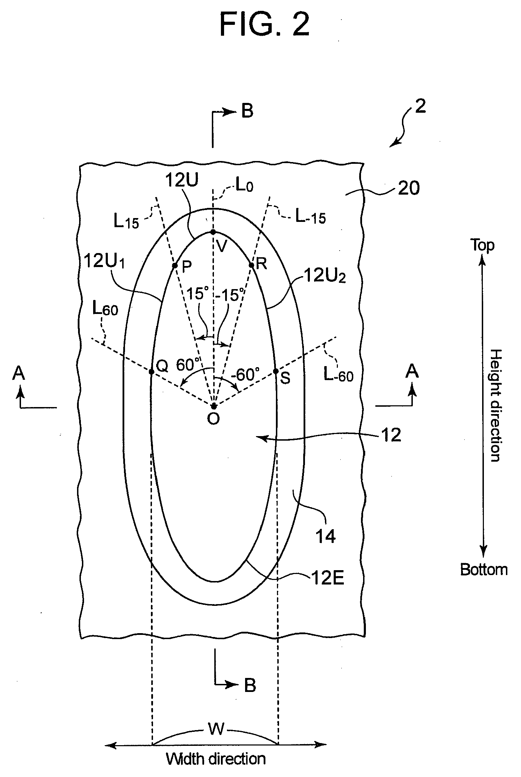

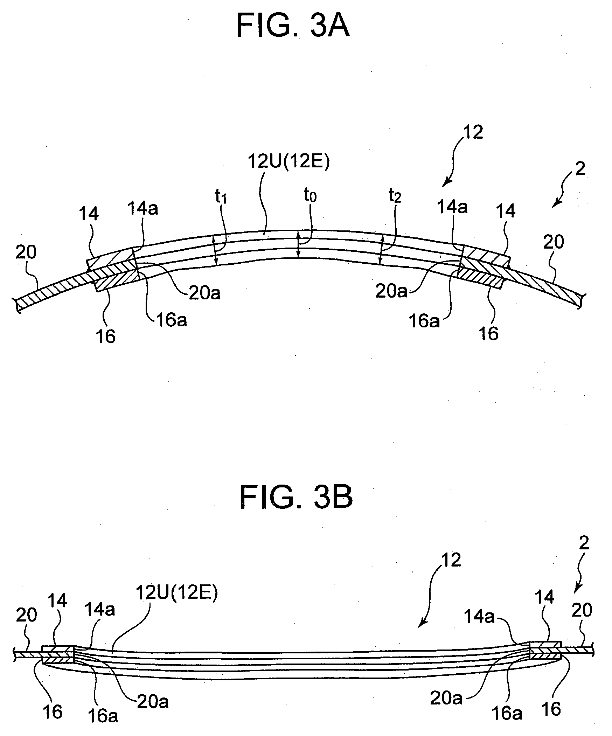

Next, the shape of the door opening according to some embodiments will be described in reference to Figs. 2 and 3. Fig. 2 is a diagram of the shape of the door opening 12 as seen in the radial direction of the tower 2. Fig. 3A is a cross-sectional diagram taken along the line A-A of Fig. 2. Fig. 3B is a cross-sectional diagram taken along the line B-B of Fig. 2.

As shown in Fig. 2, Fig. 3A and Fig. 3B, an outer circumferential side coaming 14 and an inner circumferential side coaming 16 are disposed around the door opening 12, serving as the reinforcement member for strengthening the surrounding part of the door opening 12. The outer circumferential side coaming 14 and the inner circumferential side coaming 16 are disposed respectively at the outer circumferential side and the inner circumferential side of the tower body 20 of tower 2 for a wind turbine generator. For each coaming 14, 16, the position of the opening side end 14a, 16a of each coaming 14, 16 is the same as the position of the opening side end 20a of the tower body 20. In this manner, the opening side end 14a, 16a of the coaming and the opening side end 20a of the tower body 20 collectively form the circumferential rim part 12E of the door opening 12.

Herein, Fig. 2 is a diagram of the shape of the door opening 2 as seen from outside in the radial direction of the tower 2. As described above, the position of the opening side end 14a, 16a of each coaming is the same as the position of the opening side end 20a of the tower body, and thus the shape of the door opening 12 as seen from inside in the radial direction of the tower 2 is similar to the shape shown in Fig. 2.

Hereinafter, in Fig. 2, the points of the upper rim part 12U of the door opening 12, which is the part above the central position in the height direction of the door opening 12 (the height direction of the tower) of the circumferential rim part 12E of the door opening 12, being the part above the central position O in Fig. 2, are defined as follows. First, the intersection of: the straight line L₁₅ that passes through the central position O in the height direction and the width direction of the door opening 12 and forms an angle of 15 degrees against the vertical line L₀ that passes through the central position O; and the upper rim part 12U of the door opening 12 is referred to as an intersection P. Next, the intersection of: the straight line L₆₀ that passes through the central position O and forms an angle of 60 degrees against the vertical line L₀ that passes through the central position O; and the upper rim part 12U of the door opening 12 is referred to as the intersection Q. The intersection of: the straight line L₋₁₅ that passes through the central position O and forms an angle of minus 15 degrees against the vertical line L₀: and the upper rim part 12U of the door opening 12 is referred to as an intersection R. The intersection of: the straight line L₋₆₀ that passes through the central position O and forms an angle of minus 60 degrees against the vertical line L₀: and the upper rim part 12U of the door opening 12 is referred to as an intersection S. Also, the intersection of the vertical line L₀ that passes through the central position O and the upper rim part 12U is referred to as an intersection V.

When defined as above, the upper rim part 12U of the door opening 12 shown in Fig. 2 has a curvature radius larger than half the width W (W/2) of the door opening 12 in at least one part of the first section 12U₁ between the intersection P and the intersection Q, and at least one part of the second section 12U₂ between the intersection R and the intersection S.

According to the research of the inventors, in the tower 2 for a wind turbine generator, it became clear that, the stress tends to concentrate on the first section 12U₁ between the intersection P and the intersection Q and in the second section 12U₂ between the intersection R and the intersection S of the upper rim part 12U of the door opening 12 when the rotor 10 receive the load.

Thus, by forming the upper rim part 12U of the door opening 12 to have a curvature radius larger than half the width of the door opening 12 in at least a part (preferably, the entire part) of the first section 12U₁ between the intersection P and the intersection Q and in at least a part (preferably, the entire part) of the second section 12U₂ between the intersection R and the intersection S, it is possible to effectively increase the fatigue strength for the part on which the stress tends to concentrate of the surrounding part of the door opening 12 compared to the configuration having the conventional door opening shown in Fig. 5. Accordingly, it is possible to achieve high fatigue strength around the door opening 12 even when the reinforcement configuration of the coaming or the like is simplified. As a result, it is possible to provide a tower 2 for a wind turbine generator with a simple configuration with high fatigue strength around the door opening 12.

In some embodiments, in the door opening 12 shown in Fig. 2, the curvature radius of the upper rim part 12U in the at least one part (preferably the entire part) of the first section 12U₁ is larger than the curvature radius of the upper rim part at the intersection V, and the curvature radius of the upper rim part 12U in the at least one part (preferably the entire part) of the second section 12U₂ is larger than the curvature radius of the upper rim part 12U at the intersection V.

According to the research of the inventors, in the tower 2 for a wind turbine generator, it became clear that the stress is more likely to concentrate on the first section 12U₁ between the intersection P and the intersection Q than on the position of the intersection V of the upper rim part 12U of the door opening 12, when the wind turbine receives the load. Similarly, it became clear that the stress is more likely to concentrate on the second section 12U₂ between the intersection R and the intersection S than on the position of the intersection V.

Thus, the curvature radius of the upper rim part 12U in at least one part (preferably the entire part) of the first section 12U₁ is larger than the curvature radius of the upper rim part 12U at the intersection V. Also, the curvature radius of the upper rim part 12U in at least one part (preferably the entire part) of the second section 12U₂ is larger than the curvature radius of the upper rim part 12U at the intersection V.

As a result, compared to the configuration having the conventional opening shown in Fig. 5, it is possible to effectively increase the fatigue strength of the part around the opening 12, on which the stress is more likely to concentrate, while not increasing the fatigue strength at the part around the opening 12, on which the stress is less likely to concentrate. Accordingly, it is possible to achieve high fatigue strength around the door opening 12 even when the reinforcement configuration of the coaming or the like is simplified.

In some embodiment, for the door opening 12 shown in Fig. 3A, the thickness t₁ of the upper rim part 12U in the at least one part (preferably the entire part) of the first section 12U₁ is larger than the thickness to of the upper rim part 12U at the intersection V of the upper rim part 12U and the vertical line passing through the central position O. Also, the thickness t₂ of the upper rim part 12U in the at least one part (preferably the entire part) of the second section 12U₂ is larger than the thickness to.

As a result, compared to the conventional door opening shown in Fig. 5, it is possible to effectively increase the fatigue strength of such part around the opening 12, on which the stress is more likely to concentrate, while not increasing the fatigue strength at such part around the opening 12, on which the stress is less likely to concentrate. Accordingly, it is possible to achieve high fatigue strength around the door opening 12 even when the reinforcement configuration of the coaming or the like is simplified.

In some embodiments, for the door opening 12 shown in Fig. 3A, the above thickness t₁ and thickness t₂ may be set larger than the thickness to by setting the thickness of the outer circumferential side coaming 14 in at least one part (preferably the entire part) of the first section 12U₁ and at least one part (preferably the entire part) of the second section 12U₂ larger than the thickness of the outer circumferential side coaming 14 at the intersection V. Also, the above thickness t₁ and thickness t₂ may be set larger than the thickness to by setting the thickness of the inner circumferential side coaming 16 in at least one part (preferably the entire part) of the first section 12U₁ and at least one part (preferably the entire part) of the second section 12U₂ larger than the thickness of the inner circumferential side coaming 16 at the intersection V. Moreover, the above thickness t₁ and thickness t₂ may be set larger than the thickness to by adjusting the thickness of both of the outer circumferential side coaming 14 and the inner circumferential side coaming 16. Alternately, the above thickness t₁ and thickness t₂ may be set larger than the thickness to by adjusting the thickness of the tower body 20 itself.

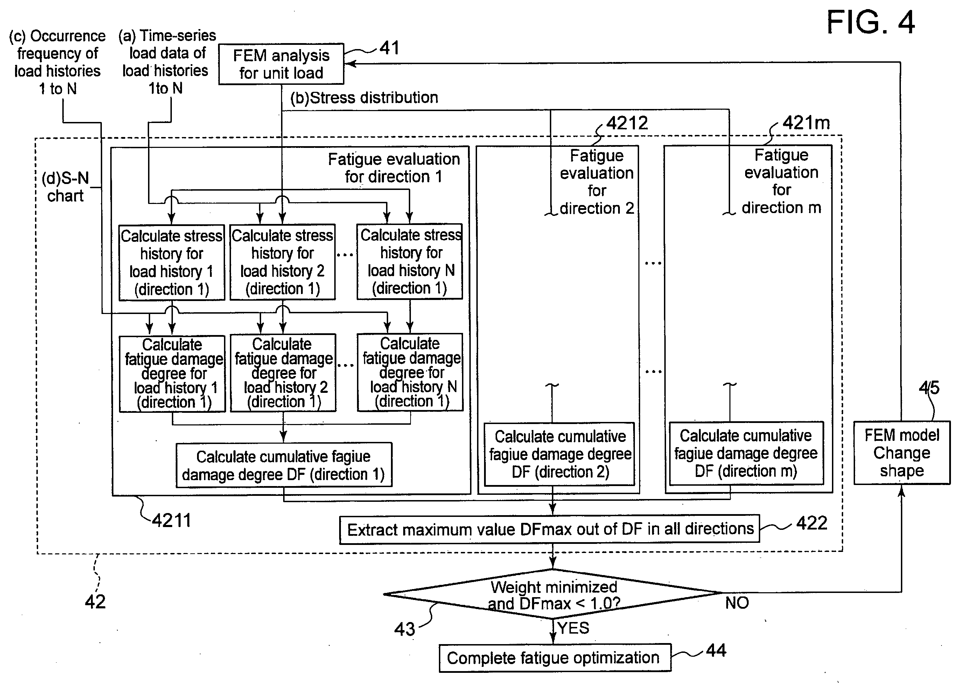

The shape of the above door opening 12 described using Figs. 1 to 3 can be determined by the method shown in Fig. 4, which is a flow diagram for determining the shape of the door opening 12 according to some embodiments.

In Fig. 4, in the process 41, the stress that occurs when the unit load acts on the wind turbine is calculated for each part of the door opening 12, said each part obtained by dividing the door opening 12 into a mesh using the Finite Element Method (FEM).

In the process 42, for each part of the door opening 12, the cumulative fatigue damage degree DF in each of the stress evaluation directions 1 to m, which are directions taken by 10 degrees in the range of 180 degrees (plus or minus 90 degrees) from the main direction for instance, is calculated based on: (a) the time-series data of the load in N cases of the load histories 1 to N for the load acting on the wind turbine; (b) the distribution of the stress that occurs in each part of the door opening 12 (the parts corresponding to the mesh) when the unit load acts on the wind, calculated by the process 41; (c) the occurrence frequency (the number of occurrence) of each case for the time-series data of the load in N cases; and (d) the S-N chart (processes 4211 to 421m). Then, the maximum value DF_{MAX} out of the cumulative fatigue damage degrees DF is extracted (process 422). In Fig. 4, the process flow for directions 2 to "m" is partially omitted because each flow in processes 4211 to 421m is the same except that the stress evaluation directions are varied.

Detailed process flow for each of the above processes 4211 to 421m is as follows. First, (a) the time-series data of the load in N cases of the load histories 1 to N for the load acting on the wind turbine; and (b) the distribution of the stress that occurs in each part of the door opening 12 (the parts corresponding to the mesh) when the unit load acts on the wind turbine calculated by the process 41 are accumulated, thereby deriving for each evaluation direction the stress history (stress distribution) that occurs in each part of the door opening 12 when the time-series load data of each case (load histories 1 to N) acts on the wind turbine. Next, the two-dimensional rain flow process (cycle counting method) is performed on the calculated result. The fatigue damage degree of each case is calculated based on: the result of the above rain flow process, (c) the occurrence frequency (the number of occurrence) of each case for the time-series data of the load in N cases; and (d) the S-N chart. Then, the fatigue damage degree of each case is added up to derive the accumulative fatigue damage degree in each evaluation direction. Herein, for the non-welded part of the door opening 12, correction process of the average stress may be performed on the result of the two-dimensional rain-flow process before calculating the accumulative damage degree.

In determination 43, it is determined whether the weight of the coaming is minimized under the condition where the maximum value DF_{MAX} for each part of the door opening 12 calculated by process 422 is less than 1.0 in the entire part of the door opening 12. When it is determined in determination 43 that the weight of the coaming is minimized under the above condition, the optimization of the shape of the door opening is completed in process 44, and the shape of the door opening is determined. When it is determined that the weight of the coaming is not minimized in determination 43, the shape of the FEM model is changed in process 45, returns to process 41, and the above processes and determination are repeated until it is determined that the weight of the coaming is minimized under the above condition in determination 43.

As described above, in the method of determining the shape of the door opening 12 shown in Fig. 4, the accumulative damage degree DF is calculated by adding the fatigue damage degrees under a plurality of load conditions for a plurality of stress directions. Then, a large accumulative damage degree DF_{MAX} is selected as the evaluation index for optimization among the accumulative damage degrees DF in the stress directions. With the above method, it is possible to evaluate the strength considering the stress directions more appropriately than the evaluation methods based on the Von Mises stress or the principal stress, thereby making it possible to derive the shape of the door opening 12 described above in reference to Figs. 1 to 3.

### Reference Signs List

- 1: Wind turbine generator
- 2: Tower for a wind turbine generator
- 3: Nacelle
- 4: Hub
4a Hub cover
- 5: Blade
- 6: Main shaft
- 7: Gear box
- 8: Output shaft
- 9: Generator
- 10: Rotor
- 12: Door opening
12E Circumferential rim part
12U Upper rim part
12U₁ First section
12U₂ Second section
- 14: Outer circumferential side coaming
14a Opening side end of outer circumferential side coaming
- 16: Inner circumferential side coaming
16a Opening side end of inner circumferential side coaming
- 20: Tower body
- 20a: Opening side end of tower body

## Claims

1. A tower (2) for a wind turbine generator (1) comprising a door opening (12),
wherein, as seen from a radial direction of the tower (2), an upper rim part (12U) of the door opening (12) has a curvature radius larger than a half of a width of the opening (12) in at least a part of a first section (12U₁) between an intersection P and an intersection Q and in at least a part of a second section (12U₂) between an intersection R and an intersection S,
where
the upper rim part (12U) is a part of a rim of the door opening (12) which is above a center of the door opening (12) in a height direction of the tower (2),
the intersection P is an intersection of the upper rim part (12U) and a straight line (L₁₅) passing through a central position (O) in both width and height directions of the opening (12) and forming an angle of 15 degrees with a vertical line (Lo) passing through the central position (O),
the intersection Q is an intersection of the upper rim part (12U) and a straight line (L₆₀) passing through the central position (O) and forming an angle of 60 degrees with the vertical line (L₀) passing through the central position (O),
the intersection R is an intersection of the upper rim part (12U) and a straight line (L-₁₅) passing through the central position (O) and forming an angle of minus 15 degrees with the vertical line (L₀) passing through the central position (O), and
the intersection S is an intersection of the upper rim part (12U) and a straight line (L₋₆₀) passing through the central position (O) and forming an angle of minus 60 degrees with the vertical line (L₀) passing through the central position (O), **characterized in that**
a thickness (t1) of the upper rim part (12U) in the at least one part of the first section (12U₁) is larger than a thickness (t0) of the upper rim part (12U) at the intersection V of the upper rim part (12U) and the vertical line (L₀) passing through the central position (O), and
a thickness (t2) of the upper rim part (12U) in the at least one part of the second section (12U₂) is larger than the thickness (t0) of the upper rim part (12U) at the intersection V of the upper rim part (12U) and the vertical line (L₀) passing through the central position (O).

2. The tower (2) for a wind turbine generator (1) according to claim 1,
wherein the curvature radius of the upper rim part (12U) in the at least one part of the first section (12U₁) is larger than a curvature radius of the upper rim part (12U) at the intersection V of the upper rim part (12U) and the vertical line (L₀) passing through the central position (O), and
wherein the curvature radius of the upper rim part (12U) in the at least one part of the second section (12U₂) is larger than the curvature radius of the upper rim part (12U) at the intersection V of the upper rim part (12U) and the vertical line (L₀) passing through the central position (O).

3. The tower (2) for a wind turbine generator (1) according to any of claims 1 or 2,
wherein, as seen from a radial direction of the tower (2), the upper rim part (12U) of the door opening (12) has a curvature radius larger than a half of a width of the opening (12) over the entire first section (12U₁) and over the entire second section (12U₂).

4. The tower (2) for a wind turbine generator (1) according to any of claim 1 to 3,
wherein the curvature radius of the upper rim part (12U) over the entire first section (12U₁) is larger than the curvature radius of the upper rim part (12U) at the intersection V, and
wherein the curvature radius of the upper rim part (12U) over the entire second section (12U₂) is larger than the curvature radius of the upper rim part (12U) at the intersection V.

5. A wind turbine generator (1) comprising:
a rotor (10) including at least one blade (5);
a generator (9) configured to be driven by rotation energy of the rotor (10) being transmitted; and
a tower (2) for the wind turbine generator (1) according to any of claims 1 to 4.

## Patentansprüche

1. Turm (2) für eine Windkraftanlage (1), welcher eine Türöffnung (12) umfasst,
wobei, aus einer radialen Richtung des Turms (2) gesehen, ein oberer Randteil (12U) der Türöffnung (12) einen Krümmungsradius aufweist, der in mindestens einem Teil eines ersten Abschnitts (12U₁) zwischen einem Schnittpunkt P und einem Schnittpunkt Q und in mindestens einem Teil eines zweiten Abschnitts (12U₂) zwischen einem Schnittpunkt R und einem Schnittpunkt S größer als eine Hälfte einer Breite der Öffnung (12) ist, wobei
der obere Randteil (12U) ein Teil eines Randes der Türöffnung (12) ist, der in einer Höhenrichtung des Turms (2) oberhalb eines Mittelpunkts der Türöffnung (12) ist,
der Schnittpunkt P ein Schnittpunkt des oberen Randteils (12U) und einer geraden Linie (L₁₅) ist, die durch eine in sowohl Breiten- als auch Höhenrichtung der Öffnung (12) mittige Position (O) verläuft und mit einer senkrechten Linie (L₀), die durch die mittige Position (O) verläuft, einen Winkel von 15 Grad bildet,
der Schnittpunkt Q ein Schnittpunkt des oberen Randteils (12U) und einer geraden Linie (L₆₀) ist, die durch die mittige Position (O) verläuft und mit der senkrechten Linie (L₀), die durch die mittige Position (O) verläuft, einen Winkel von 60 Grad bildet,
der Schnittpunkt R ein Schnittpunkt des oberen Randteils (12U) und einer geraden Linie (L₋₁₅) ist, die durch die mittige Position (O) verläuft und mit der senkrechten Linie (L₀), die durch die mittige Position (O) verläuft, einen Winkel von minus 15 Grad bildet,
der Schnittpunkt S ein Schnittpunkt des oberen Randteils (12U) und einer geraden Linie (L₋₆₀) ist, die durch die mittige Position (O) verläuft und mit der senkrechten Linie (L₀), die durch die mittige Position (O) verläuft, einen Winkel von minus 60 Grad bildet, **dadurch gekennzeichnet, dass**
eine Dicke (t1) des oberen Randteils (12U) in dem mindestens einen Teil des ersten Abschnitts (12U₁) größer ist als eine Dicke (t0) des oberen Randteils (12U) an dem Schnittpunkt V des oberen Randteils (12U) und der senkrechten Linie (L₀), die durch die mittige Position (O) verläuft, und
eine Dicke (t2) des oberen Randteils (12U) in dem mindestens einen Teil des zweiten Abschnitts (12U₂) größer ist als die Dicke (t0) des oberen Randteils (12U) an dem Schnittpunkt V des oberen Randteils (12U) und der senkrechten Linie (L₀), die durch die mittige Position (O) verläuft.

2. Turm (2) für eine Windkraftanlage (1) nach Anspruch 1,
wobei der Krümmungsradius des oberen Randteils (12U) in dem mindestens einen Teil des ersten Abschnitts (12U₁) größer ist als ein Krümmungsradius des oberen Randteils (12U) an dem Schnittpunkt V des oberen Randteils (12U) und der senkrechten Linie (L₀), die durch die mittige Position (O) verläuft, und
wobei der Krümmungsradius des oberen Randteils (12U) in dem mindestens einen Teil des zweiten Abschnitts (12U₂) größer ist als der Krümmungsradius des oberen Randteils (12U) an dem Schnittpunkt V des oberen Randteils (12U) und der senkrechten Linie (L₀), die durch die mittige Position (O) verläuft.

3. Turm (2) für eine Windkraftanlage (1) nach einem beliebigen der Ansprüche 1 oder 2,
wobei, aus einer radialen Richtung des Turms (2) gesehen, der obere Randteil (12U) der Türöffnung (12) einen Krümmungsradius aufweist, der über den gesamten ersten Abschnitt (12U₁) und über den gesamten zweiten Abschnitt (12U₂) größer als eine Hälfte einer Breite der Öffnung (12) ist.

4. Turm (2) für eine Windkraftanlage (1) nach einem beliebigen der Ansprüche 1 bis 3,
wobei der Krümmungsradius des oberen Randteils (12U) über den gesamten ersten Abschnitt (12U₁) größer als der Krümmungsradius des oberen Randteils (12U) an dem Schnittpunkt V ist, und
wobei der Krümmungsradius des oberen Randteils (12U) über den gesamten zweiten Abschnitt (12U₂) größer als der Krümmungsradius des oberen Randteils (12U) an dem Schnittpunkt V ist.

5. Windkraftanlage (1), umfassend:
einen Rotor (10), der mindestens ein Rotorblatt (5) umfasst:
einen Generator (9), der dazu ausgebildet ist, durch Rotationsenergie des Rotors (10), die übertragen wird, angetrieben zu werden, und
einen Turm (2) für die Windkraftanlage (1) nach einem beliebigen der Ansprüche 1 bis 4.

## Revendications

1. Tour (2) pour un générateur d'éolienne (1) comprenant une ouverture de porte (12),
dans laquelle, comme observé à partir d'une direction radiale de la tour (2), une partie de rebord supérieure (12U) de l'ouverture de porte (12) a un rayon de courbure supérieur à la moitié d'une largeur de l'ouverture (12) dans au moins une partie d'une première section (12U₁), entre une intersection P et une intersection Q et dans au moins une partie d'une seconde section (12U₂) entre une intersection R et une intersection S, où
la partie de rebord supérieure (12U) est une partie d'un rebord de l'ouverture de porte (12) qui est au-dessus d'un centre de l'ouverture de porte (12) dans une direction de hauteur de la tour (2),
l'intersection P est une intersection de la partie de rebord supérieure (12U) et d'une ligne droite (L₁₅) passant par une position centrale (0) à la fois dans les directions de largeur et de hauteur de l'ouverture (12) et formant un angle de 15 degrés avec une ligne verticale (L₀) passant par la position centrale (0),
l'intersection Q est une intersection de la partie de rebord supérieure (12U) et d'une ligne droite (L₆₀) passant par la position centrale (0) et formant un angle de 60 degrés avec la ligne verticale (L₀) passant par la position centrale (0),
l'intersection R est une intersection de la partie de rebord supérieure (12U) et d'une ligne droite (L₋₁₅) passant par la position centrale (0) et formant un angle de moins 15 degrés avec la ligne verticale (L₀) passant par la position centrale (0), et
l'intersection S est une intersection de la partie de rebord supérieure (12U) et d'une ligne droite (L₋₆₀) passant par la position centrale (0) et formant un angle de moins 60 degrés avec la ligne verticale (L₀) passant par la position centrale (0), **caractérisé en ce que**
une épaisseur (t1) de la partie de rebord supérieure (12U) dans la au moins une partie de la première section (12U₁) est supérieure à une épaisseur (t0) de la partie de rebord supérieure (12U) à l'intersection V de la partie de rebord supérieure (12U) et de la ligne verticale (L₀) passant par la position centrale (0), et
une épaisseur (t2) de la partie de rebord supérieure (12U) dans la au moins une partie de la seconde section (12U₂) est supérieure à une épaisseur (t0) de la partie de rebord supérieure (12U) à l'intersection V de la partie de rebord supérieure (12U) et de la ligne verticale (L₀) passant par la position centrale (0).

2. Tour (2) pour un générateur d'éolienne (1) selon la revendication 1,
dans laquelle le rayon de courbure de la partie de rebord supérieure (12U) dans la au moins une partie de la première section (12U₁) est supérieur à un rayon de courbure de la partie de rebord supérieure (12U) à l'intersection V de la partie de rebord supérieure (12U) et de la ligne verticale (L₀) passant par la position centrale (0), et
dans laquelle le rayon de courbure de la partie de rebord supérieure (12U) dans la au moins une partie de la seconde section (12U₂) est supérieur au rayon de courbure de la partie de rebord supérieure (12U) à l'intersection V de la partie de rebord supérieure (12U) et de la ligne verticale (L₀) passant par la position centrale (0).

3. Tour (2) pour un générateur d'éolienne (1) selon l'une quelconque des revendications 1 ou 2,
dans laquelle, comme observé à partir d'une direction radiale de la tour (2), la partie de rebord supérieure (12U) de l'ouverture de porte (12) a un rayon de courbure supérieur à une moitié d'une largeur de l'ouverture (12) sur toute la première section (12U₁) et sur toute la seconde section (12U₂).

4. Tour (2) pour un générateur d'éolienne (1) selon l'une quelconque des revendications 1 à 3,
dans laquelle le rayon de courbure de la partie de rebord supérieure (12U) sur toute la première section (12U₁) est supérieur au rayon de courbure de la partie de rebord supérieure (12U) à l'intersection V, et
dans laquelle le rayon de courbure de la partie de rebord supérieure (12U) sur toute la seconde section (12U₂) est supérieur au rayon de courbure de la partie de rebord supérieure (12U) à l'intersection V.

5. Générateur d'éolienne (1) comprenant :
un rotor (10) comprenant au moins une pale (5) ;
un générateur (9) configuré pour être entraîné par l'énergie de rotation du rotor (10) qui est transmise ; et
une tour (2) pour le générateur d'éolienne (1) selon l'une quelconque des revendications 1 à 4.
